# EUROPEAN PATENT APPLICATION

(11) **EP 1 980 162 A1**
(43) Date of publication of application: **15.10.2008**
(21) Application number: 07704728.0
(22) Date of filing: 15.01.2007
(51) Int. Cl.: A23P 1/08, A23B 9/14, A23C 19/16

(54) **SURFACE TREATMENTS AND COATINGS FOR CHEESE AND SEEDS (SUNFLOWER AND PUMPKIN) WITH PALMITIC, LAURIC AND ESTEARIC FATTY ACID ESTERS WITH SUCROSE**

(30) Priority: 30.01.2006 ES 200600196; 10.01.2007 ES 200700082
(71) Applicant: Mousala, S. L., E-18620 Granada (ES); Paris Villalta, Javier, 18620 Alhendin (ES); Fernandez Garcia, Immaculada, 18620 Alhendin (ES); Lara Cambil, Armando, 18620 Alhendin (ES); Garcia Pareja, Maria Pilar, 18620 Alhendin (ES)
(72) Inventor: PARIS VILLALTA, Javier, E-18620 ALHENDIN (ES); FERNANDEZ GARCIA, Immaculada, E-18620 ALHENDIN (ES); LARA CAMBIL, Armando, E-18620 ALHENDIN (ES); GARCIA PAREJA, María Pilar, E-18620 ALHENDIN (ES)
(74) Representative: Munoz Garcia, Antonio
(86) International application number: PCT/ES2007/000014
(87) International publication number: WO 2007/085668

(57) **Abstract**

The invention relates to surface treatments and coatings for cheese and (sunflower and pumpkin) seeds with palmitic, lauric and stearic fatty acid esters with sucrose, intended to protect the food and especially the surface thereof, comprising products having film-forming properties based on esters of palmitic sucrose ester fatty acids, lauric sucrose ester fatty acids and stearic sucrose ester fatty acids acting alone or in combination with preservatives and/or other food additives; said preservatives and/or food additives, or any mixture thereof, which are found in the end product to be applied between 1 and 40% (w/w), being added to them.

## Description

### Object of the Invention

As expressed in the title of this specification, the present invention relates to products with film-forming properties based on palmitic, lauric and stearic fatty acid esters with sucrose (palmitic, lauric and stearic sucrose esters, respectively), the purpose of which is to protect the food, and especially the surface thereof, either alone or in combination with preservatives and/or with other food additives (colors, antioxidants, sequestering agents, stabilizers, food polymers or biopolymers, etc.), being intended for products from the food industry and more specifically from the cheese and (sunflower and pumpkin) seed industry.

These products have the virtue of being formed by natural products (extracted from natural sources) or a combination thereof with one another. Mono and disaccharide esters are products which can be applied in the food industry, they are biodegradable and come from renewable sources.

The main purpose of said compounds is to substitute preservatives and polymeric coatings which are synthesized using raw materials from petroleum.

### Field of the Invention

The field of application of the present invention is within the industry dedicated to the manufacture of coatings for food industry, especially natural coatings to be applied on the surface of cheese and of (sunflower and pumpkin seeds).

### Background of the Invention

Within disaccharide polyesters, the so-called sucrose esters, which are esters formed by an organic ester and sucrose, are known since before 1880.

The first derivative was sucrose octaacetate [Akoh 2002]; sucrose octapalmitate was synthesized in 1921 with another different acyl group [Hess, 1921].

The production of sucrose esters as potential surfactants (detergents), which were also supposed to be easily biodegradable both in aerobic and anaerobic conditions was thought of in 1952 [Akoh 2002].

Sucrose esters, depending on their degree of substitution, can cover an HLB ("hydrophilic-lipophilic balance") range between 1 to 16, being able to be used, as a result of their wide HLB range, in a variety of emulsions, both W/O (water in oil) or O/W (oil in water) emulsions.

These sucrose polyesters can also be used as fat substitutes in food with low calorie content (an example of this application was the "Procter & Gamble, Inc" patent [Mattson 1971], which gave rise to the commercial product "Olestra").

Sucrose esters are currently authorized for their use in food as emulsifiers in Europe, with additive number E-473 [Directive].

A variety of carboxylic acid esters with mono and disaccharides isolated from natural sources have been described [Holmberg, 2001] [Severson, 1994], with different biological activities, some examples of which are mentioned: molluscicides [Moser, 1999], insecticides [McKenzie, 2004] [Severson, 1994], antioxidants [Calis, 2002], antimicrobial agents [Moser, 1999].

As regards synthesized sugar esters, specifically fatty acid esters with sucrose (sucrose fatty acid esters), some of their generic properties as surfactants or emulsifiers [Akoh, 1994 and 2002] [Polat, 2001] and as antimicrobial agents (either alone [Marshall, 1986] [Akoh, 1994] or in combination with other preservatives such as nisin [Thomas, 1998]) are known.

There is also literature relating to their properties as coatings for fruit, with the sucrose ester alone [Soria, 1999] [McGuire, 1999] [Kluge, 1998] or in combination with antioxidants [Bauchot, 1995 and 1996].

There are currently commercial products based on sucrose fatty acid esters, the purpose of which is to provide coatings for fruit and vegetables only, such as Semperfresh^{™} of Agricoat Industries Ltd.

Some patents use sucrose fatty acid esters as part of formulas for making films or coatings which are in contact with food, specifically with fruit and vegetables:
- CN1488262 [Zhao, 2003] proposes a film or coating for preserving fruit or vegetables, which is applied directly on the latter, the composition of which is a mixture of monoglyceride, sucrose ester, polysaccharide from plants with adherent properties and water
- GB1593856 and US4338342 [Hong, 1976] propose the use of sucrose fatty acid esters together with other additives as a coating for fruit and vegetables, with antifungal properties (if an antifungal agent such as pimaricin has been added to it), antioxidant properties, etc. depending on the additive added.

As regards the use of these compounds, sucrose fatty acid esters, alone or in combination with other preservatives usually used in food [Directive], such as for example sorbic acid (E-200) and its salts (potassium salt E-202 and calcium salt E-203), benzoic acid (E- 210) and its salts (sodium salt E-211, potassium salt E-212 and calcium salt E-233), parabens (ethyl p-hydroxybenzoate E-214 and its sodium salt E-215, propyl p-hydroxybenzoate E-216 and its sodium salt E-217, methyl p-hydroxybenzoate E-218 and its sodium salt E-219) , propionic acid (E-280) and its salts (sodium salt E-281, potassium salt E-282 and calcium salt E-283) and pimaricin (E-235, a polyenic-macrolide antibiotic), the following patents are found:
- JP2002360231 [Hayashi, 2001] proposes an antimicrobial film or coating for packages containing food and which contributes to preserving such food. It is formed from a cellulose derivative, sucrose fatty acid ester, glycerol ester with fatty acid and malic acid.
- Sucrose fatty acid esters as antimicrobial additives for food: a) JP2002345447 [Kazuyuki, 2001] and JP2002234808 [Kazuyuki, 2000], based on sucrose fatty acid esters and lysozyme, to preserve prepared dishes and food in general, respectively.
- JP2002370908 [Hideki, 2001], antimicrobial agent (compound of an organic acid or its salts, ethanol, a fatty acid ester with glycerol and sucrose fatty acid ester), for recently prepared dishes with an antimicrobial, preservative and antiseptic effect. Food additive.
- JP2001258527 [Sayaka, 2000] and JP2000201660 [Koishi, 1999] consists of complex formulas of antimicrobial products for the purpose of achieving a food preservative. They are formed from a mixture of sodium or potassium gluconate, glycerin, one or more organic acids or their salts, ethanol, sucrose fatty acid ester, a thiamine ester, vitamin B1 esters, and polylysine, protamine, lysozyme, chitosan and polyphosphates.
- JP2000342197 [Masaaki, 1999] describes the invention of an emulsifier with antimicrobial properties for food, especially applicable to translucent beverages. The anitimicrobial agent is the sucrose fatty acid esters, especially those enriched with monoester at least 80% or more. Polyglyceride fatty acid esters and a monoglyceride of an organic acid accompany the sucrose esters
- Antimicrobial formulations for beverages:
   a) JP2000295976 [Tetsuya, 1999], it is formed by fatty acid esters with sugar, polyglyceride fatty acid esters, propylene glycol, glycerol, ethanol and water.
   b) JP2000300226 [Takeshi, 1999], in this case, formulations are proposed with sucrose fatty acid ester with at least 70% of monoester, which can be mixed with the remaining components of the beverages (food gums, pectins, polyglyceride fatty acid esters, etc.)
   c) JP200030225 [Takeshi, 1999], in this case, as in the previous patent, formulations are proposed with sucrose fatty acid ester with at least 70% of monoester, but they differ in that lecithin and polyglyceride fatty acid ester are added.
- JP2000159675 [Takashi, 1998] describes fatty acid esters with fructose and galactose as antimicrobial agents against gram+ bacteria, to be applied in food and in the oral hygiene industry.
- WO9925206 [Hoover, 1997] adds sucrose fatty acid esters which, together with the application of high pressures, achieves an antimicrobial effect against spore-forming microorganisms.
- JP11127829 [Masaaki, 1997] and JP10070971 [Masaaki, 1996] propose the use of sucrose fatty acid esters (between C6-C16 and between C8-C20, respectively), with a monoester content of at least 93% in order to obtain antimicrobial properties, in addition to emulsifiers, dispersants and solubilizers in acidic food (pH between 2 and 4.4). They develop antimicrobial activity against thermophilic microorganisms such as *Bacillus* and *Clostridium,* for example.
- JP7147953 [Satoshi, 1993] describes an antimicrobial agent for its use in cosmetics, pharmacy and food, against *Bacillus* and *Clostridium* (spore-forming gram+ bacilli), which is a mixture of sucrose fatty acid esters and lecithin phospholipids (LPG-80 lecithin lysotype), and shows a synergistic antimicrobial effect.
- JP5146282 [Masaaki, 1991] consists of an antibacterial agent combining nisin and a hydrophilic surfactant, such as sucrose fatty acid esters, such that both of them have a synergistic effect against gram+ bacteria.
- JP59216577 [Akira, 1983] describes a preservative based on a mixture of monoesters of saturated fatty acids between 6 and 18 carbons with glycerol, monopropylene glycol, sorbitan and sucrose.
- JP57016682 [Kazuo, 1980], in this case, the food preservative is a mixture of a food chelating agent and a non-ionic surfactant agent such as sucrose fatty acid esters (HLB of 3 to 5).
- JP55102507 [Gennosuke, 1979] proposes a germicide disinfectant as a pre-treatment for quick-frozen food such as frozen fish. The disinfectant consists of iodine, sucrose fatty acid ester (monolaurate, for example) and alcohol.

The existence of patents using sucrose fatty acid esters as part of formulas for making coatings for nuts, snacks or candy:
- Oxidation-Prevented Nut (Nuts coated with sucrose fatty acid esters for oxidation prevention).
- Nishi, Hiroaki; Watanabe, Takao. (Tokukura Seitosho K. K., Japan). Jpn. Koka) Tokkyo Koho (2005), 5 pp. CODEN: JKXXAF JP2005278446 A20051013 PR: JP20040094930, Date:20040329.

It consists of coating nuts with sucrose esters (C8-C22) with a different degree of substitution to prevent their oxidation. In the examples of the invention, the sucrose esters used are palmitic and stearic sucrose esters, and the nuts are peanuts and almonds, although the detailed description of the patent also mentions other nuts such as hazelnuts, pine nuts, cashew nuts, almonds, walnuts, macadamia nuts, etc., but not sunflower seeds, pumpkin seeds or corn nuts.
- Combination cold snack.
   Komuro, Yasunori; Settsu-shi Osaka; Sunaroma Co., Ltd. Jpn. Tokkyo Koho (2000).
   EP 1 036 506 A2; JP 3032795 B1 20000417.
   Priority: JP 6779499 19990315. Date of publication: 20-09-200 Bulletin 2000/38. Application Number: 00302026.0
   Composition of chocolate and fats coated by a layer containing, among other compounds, sucrose ester with HLB=9, used for coating snacks and ice-creams.
- Confectionery toppings having excellent fat-tolerance.
   PN: NZ526103 A 20040827
   PR: JP20010320164 20011018; WO 2001JP11181 20011220
   AP: NZ 20010526103 20011220, Tokukura Co.

It consists of coatings for candy containing sucrose esters, improving the resistance to oxidation and to the formation of fat agglomerates on the surface. It does not mention sunflower seeds or similar products either.

There seems to be no specific reference or literature about the use of these sucrose fatty acid esters as coatings on the surface of cheese or (sunflower and pumpkin) seeds, either alone or in combination with preservatives and/or with other food additives (colors, antioxidants, sequestering agents, stabilizers, food polymers or biopolymers, etc.).

### Literature

Akira, Y. "Preservative". Patent JP59216577. Priority date 23/05/1983.
Akoh, C.C. and Min, D.B. "Food Lipids: Chemistry, Nutrition and Biochemistry". Second Edition (2002). Marcel Dekker, Inc. ISBN: 0-8247-0749-4.
Akoh, C.C. and Swanson, B.G. "Carbohydrate Polyesters as Fat Substitutes". First Edition (1994). Marcel Dekker, Inc. ISBN: 0-8247-9062-6.
Bauchot, A.D. and John, P. "Scald development and the levels of alpha-farnesene and conjugated triene hydroperoxides in apple peel after treatment with sucrose ester-based coatings in combination in Granny Smith food-approved antioxidants". Postharvest Biology and Technology, 7 (1-2), 41-49 (1996).
Bauchot, A.D., John, P., Soria, Y. and Recasens, I. "Sucrose ester-based coatings formulated with food-compatible antioxidant in the prevention of superficial scald in stored apples". Journal of the American Society for Horticultural Science, 120 (3), 491-486 (1995)
Calis, I., Kirmizibekmez, H., Tasdemir, D., Sticher, O. and Ireland, CM. "Sugar esters from Globularia orientalis". Zeitschrift fur Naturforschung C-A Journal of Biosciences 57 (7-8), 591-596 (2002)
European Parliament and Council Directive 95/2/EC: "Food additives other than colors and sweeteners". Amendments: Directive 98/72/EC and Directive 2001/5/EC.
Gennosuke, Y. "Preservative for fresh fish". Patent JP55102507. Priority date 03/01/1979.
Hayashi, M., Kankyo, K.H.Y., Kimura, A.K. and Osaka, K. (Proprietors of the Patent, it does not mention inventors). "Composition having antimicrobial activity and freshness keeping property for preserving foodstuff, comprises cellulose derivative and sucrose fatty ester, glycerol fatty ester and malic acid". Patent JP2002360231. Priority date 12/06/2001.
Hess, K. und Messner, E. "Übre die Synthese von Fettsanrederivaten der Zuckerarten". Chem. Ber. 54, 499 (1921).
Hideki, M., Kyoko, M. and Arata, M. "Preservative for foodstuffs comprises organic acid and/or their salts, ethanol, glycerol fatty acid ester of saturated fatty acid and sucrose fatty acid ester" . Patent JP2002370908. Priority date 12/06/2001.
Holmberg, K. "Natural surfactants". Current Opinion in Colloid & Interface Science, 6(2), 148-159 (2001).
Hong, S.T. and Dirk, A.S. "Process for the treatment of fruit and vegetables". Patent GB1593856. Priority date 17/11/1976. Homologous patent in USA: US4338342.
Hoover, D.G., Steward, C.M., Dunne, P, Sikes, A. and Dunne, CP. "Process for treating food". Patent WO9925206. Priority date 13/11/1997.
Kazuo, H. "Antiseptic food preservative' Patent JP57016682. Priority date 03/07/1980.
Kazuyuki, S. and Hiroyoshi, M. "Agent for improving storage life of daily dishes". Patent JP2002345447. Priority date 21/03/2001.
Kazuyuki, S., Kioso, H. and Hiroyoshi, M. "Antimicrobial for use in foodstuffs such as custard pudding, coffee beverage and corn soup, comprises lysozyme and sucrose fatty acid ester". Patent JP2002234808. Priority date 15/11/2000.
Kluge, R.A., Nachtigal, J.C, Hoffmann, A., Bilhalva, A.B. and Fachinello J.C "Effect of sucrose esters on peaches "BR-6" cold storage". Pesquisa Agropecuaria Brasileira, 33(2), 109-114 (1998).
Koishi, Y., Yuri, K., Ai, Y., Kazutaka, K. "Preservative for production of food using the same".
Patent JP2000201660. Priority date 11/01/1999. Masaaki, T. et al. "Antimicrobial agent". Patent JP52146282. Priority date 15/07/1991.
Marshall, D.L. and Bullerman, L.B. "Antiomicrobial activity of sucrose fatty-acid ester emulsifers", Journal of Food Science, 51 (2), 468-470 (1986).
Masaaki, T., Nobuyuki, S. "An emulsifier composition for liquid foods". Patent JP2000342197. Priority date 07/06/1999.
Masaaki, T. and Yoshio, A., "Acid food - contains sucrose fatty acid ester with predefined monoester content and fatty acid composition". Patent JP11127829. Priority date 04/11/1997.
Masaaki, T. "Use of sucrose fatty acid ester as antimicrobial agent". Patent JP10070971. Priority date 01/07/1996.
Masaaki, T. et al. "Antibacterial agent". Patent JP5146282. Priority date 15/07/1991.
Mattson, F.H. and Volpenhein, R.A. Low Calorie Fat- Containing Food Compositions". Patent US3600186 (1971).
McGuire, R.G. and Dimitroglou, D.A. "Evaluation of shellac and sucrose ester fruit coating formulation that support biological control of post-harvest grape fruit decay". Biocontrol Science and Technology, 9(1), 53-65 (1999).
McKenzie, C.L. and Puterka, G.J. "Effect of sucrose octanoate on survival of nymphal and adult Diaphorina citri (Homoptera:Psylidae) . Journal of Economic Entomology 97 (3), 970-975 (2004)
Moser, D., Klaiber, I., Vogler, B. and Kraus, V. "Molluscicidal and antibacterial compounds from Petunia hybrida". Pesticide Science, 55(3), 336-339 (1999).
Polat, T. and Linhardt, R. "Syntheses and applications of sucrose-based esters". Journal of Surfactants and Detergents, 4(4), 415-421 (2001). And the mentioned references.
Severson, R.F., Chortik, O.T., Stephenson, M.G., Akey, D.H., Neal, J.W., Pittarelli, G.W., Jackson, D.M. and Sisson, V.A. "Characterization of natural pesticide from Nicotinia gossei" Bioregulators for Crops Protection and Pest Control ACS Symposium Series, 557, 109-121 (1994) .
Satoshi, K and et al. "Antimicrobial agent and usage thereof". Patent JP7147953. Priority date 29/11/1993.
Sayaka, O. "Food preservative and method for producing food by utilizing the same". Patent JP2001258527. Priority date 22/03/2000.
Soria, Y. and Recasens, I., Gatius, F. and Puy, J. "Multivariate analysis of superficial scald susceptibility on Granny Smith apples dipped with different post-harvest treatments". Journal of Agricultural and Food Chemistry, 47 (12), 4854-4858 (1999).
Takashi, W.; Masaaki, K.; Shihoko, K.; Takahiko, T. and Tetsou, K. "Gram positive antimicrobial composition for foodstuffs and oral hygiene industry, comprises fatty acid sugar ester like fructose or galactose of saturated fatty acid (active ingredient) performs ester bonding". Patent JP2000159675. Priority date 30/11/1998.
Takeshi, K. and Kazuyuki, F. "A dispersed composition containing sucrose fatty acid ester". Patent JP2000300226. Priority date 23/04/1999.
Takeshi, K. and Kazuyuki, F. "A dispersed composition containing sucrose fatty acid ester". Patent JP2000300225. Priority date 23/04/1999.
Tetsuya N., Yuuko, F. and Yuichi, S. "Antimicrobial formulation for acid drinks". Patent JP2000295976. Priority date 10/02/1999.
Tilomas, L.V., Davies, E.A., Delves-Broughton, J. and Wimpenny, J.W.T. "Synergistic effect of sucrose fatty acid ester on nisin inhibition of Gram-positive bacteria". Journal of Applied Microbiology, 85(6), 1013-1022 (1998).
Zhao, B., Qian, H. and Zhang, W. "Vegetable and fruit coating antistaling agent and preparing process thereof". Patent CN1488262. Priority date 15/08/2003.

### Description of the Invention

There are therefore no or little references to the applications of these types of products, sucrose fatty acid esters, specifically palmitic, lauric, stearic esters, especially intended to be used as surface treatments or coatings for food products in the cheese industry and in the (sunflower and pumpkin) seed industry.

In the first case, i.e., in the cheese industry, it is necessary to maintain the surface of cheese with a good appearance and free from molds.

The presence of a protective film regulating the deterioration and maturing of the cheese is important.

Sucrose esters can be applied here alone or in combination with traditional preservatives such as pimaricin, sorbates, etc.

Sucrose esters can also be applied in combination with other film-forming food agents such as: waxes (carnauba, candelilla, etc.), synthetic polymers such as polyvinyl acetate, with biopolymers such as food gums, proteins, etc.

The effect on fresh cheese is especially striking, where the combination in small doses with any of the traditional preservatives, such as pimaricin and sorbate, maintains the piece of cheese free from visual surface contamination (both of fungi and bacteria).

The concentration of these preservatives, which in their usual applications usually ranges between 500 and 2000ppm in the case of pimaricin and between 10000 and 15000ppm in the case of sorbate, is furthermore reduced.

The deterioration is also substantially reduced.

As regards the (sunflower and pumpkin) seed industry, the oxidation of the fats of these products, which are rich in unsaturated fatty acids, is intended to be prevented.

This oxidation causes an unpleasant organoleptic effect, rancidification.

These types of products are usually packaged using modified atmospheres for the purpose of preventing said phenomenon.

Nevertheless, the application of these products on the surface is a substantial improvement because in addition to using these modified atmospheres, the product treated with sucrose esters can extend the commercial life of the product, even once the package containing it has been opened, or while waiting to package it in the factory itself.

For example, with sunflower seeds without the use of barriers (i.e. without packaging and without a modified atmosphere), the differences between those treated and those untreated with sucrose esters are spectacular, the commercial lifetime being able to be doubled without observing the rancidification of the product.

Another possibility in this line of application is that the sucrose ester supports other food additives such as flavorings, colors and sweeteners which allow broadening the range of products to be offered on the market.

Evidently, the combination with other film-forming agents such as waxes, food polymers and biopolymers is also possible and can be convenient in some cases for the purpose of suitably modifying the functionality.

### Preferred Embodiment of the Invention

Three specific examples of the application of palmitic, lauric and stearic fatty acid esters with sucrose (palmitic, lauric and stearic sucrose esters, respectively) as surface treatments and coatings applied on cheese in two first embodiments and on sunflower seeds in the third embodiment, as well as a compatibility test with edible food colors.

### Example 1. Application on cheese.

### Formula and preparation of the product:

- Lauric sucrose esters, 5%
- Pimaricin, 100ppm
- Calcium sorbate, 5000ppm
- Water, 94.5%

1kg of the product is prepared as follows: 50g of lauric sucrose esters are slowly added to 850g of water previously heated between 50°C and 60°C, stirring vigorously at the same time.

The stirring and the temperature are maintained until the complete dispersion of the esters.

It is subsequently cooled to 30°C and calcium sorbate (5g) and pimaricin (0.1g), previously dispersed in the remaining 95g of water, are added.

### Test and Application Process:

Two 200g pieces of cheese are submerged in a bath according to the previously mentioned preparation, and are left next to two other 200g pieces of untreated fresh cheese in a cool environment (12 and 15°C).

The monitoring is carried out for 20 days, observing the following:
a) After 7 days of test: the untreated cheeses present pigmentation on their surface as well as a bad smell, the treated cheeses have a natural appearance without observing color or bad smell.
b) After 20 days: the first signs of contamination already appear in the treated cheeses, their appearance and smell being much better than the untreated cheeses after 7 days. The treated cheeses have lost 22% less moisture compared to the untreated cheeses.

### Example 2. Application on cheese

### Formula and preparation of the product:

- Stearic sucrose esters, 5%.
- Pimaricin, 100ppm.
- Calcium sorbate, 5000ppm.
- Water, 94.5%.

1kg of the product is prepared as follows: 50g of stearic sucrose esters are slowly added to 850g of water previously heated between 50°C and 60°C, stirring vigorously at the same time.

The stirring and the temperature are maintained until the complete dispersion of the esters.

It is subsequently cooled to 30°C and calcium sorbate (5g) and pimaricin (0.1g), previously dispersed in the remaining 95g of water, are added.

### Test and application process:

Two 200g pieces of cheese are submerged in a bath according to the previously mentioned preparation, and are left next to two other 200g pieces of untreated fresh cheese in a cool environment (12 and 15°C).

The monitoring is carried out for 20 days, observing the following:
a) After 7 days of test: the untreated cheeses present pigmentation on their surface as well as a bad smell, whereas the treated cheeses have a natural appearance without observing color or bad smell.
b) After 20 days: the first signs of contamination already appear in the treated cheeses, their appearance and smell being much better than the untreated cheeses after 7 days.

### Example 3. Industrial-pilot test of application on sunflower seeds.

### Formula and preparation of the product:

Formula in test ranges,
- Palmitic sucrose esters, 1% - 20%
- Polysaccharide and/or Food gum: 0.01% - 2%
- Main solvent: Water, 98.8% - 73%
- Co-solvent: Food alcohol or polyalcohol, 0.1% - 5%

This product is prepared as follows: The palmitic sucrose esters are slowly added to 48.5% of the total water, previously heated between 60 and 65°C, stirring vigorously at the same time. The stirring has to be especially intense, using cutting blades (emulsifier) in parallel with conventional stirring with vanes or a helix. The stirring and temperature is maintained until the mixture is homogeneous. It is convenient to stop the stirring at some time of the process and manually mix what is adhered to the walls and to the helix stirrer, so that there are no unmixed esters in the form of lumps. The polysaccharide and/or food gum, previously dispersed in 51.5% of the remaining water, which is also heated at the same temperature, is subsequently added to the mixture. The mixture is homogenized for at least 20 minutes, while at the same time it is cooled to a temperature of less than 30°C. At this point, the alcohol or polyalcohol is slowly added, after the addition has ended, it is stirred for at least 15 more minutes, until the complete homogenization of the mixture.

### Test and application process:

The industrial treatment on sunflower seeds can be carried out in two ways, "seed in water-salt" or seed in salt". In the first way, "seed in water-salt", the seeds are subjected to vacuum and are then submerged in brine (in which the sucrose ester has been added according to the previously mentioned formulation), keeping them there between 5 minutes and 24 hours, they are then roasted in an oven. In contrast, in the "seed in salt" treatment, a concentrated brine (in which the formulation with the sucrose ester would be added) is added directly with the seed in the roasting oven.

Generally: 50kg of sunflower seeds are treated according to any of the two previous industrial processes, adding the previously mentioned formula with the sucrose ester to the brine, such that it can contain between 10 and 300g/liter of the latter in the brine according to the application, "seed in water-salt" or "seed in salt". Another 50kg are treated with brine only. Both samples are maintained in a cool environment (15 and 20°C).

The monitoring is carried out for 60 days, observing the following:
a) the seeds which have been treated are maintained without rancidification, preserving their organoleptic properties for a time period between 45 and 60 days.
b) the seeds which have not been treated with the previously described formulation only maintain their organoleptic properties for a time period comprised between 20 and 30 days.

### Example 4. Compatibility tests with edible food colors.

### Formula and preparation of the product:

- Lauric sucrose esters, 5%
- Pimaricin, 100ppm
- Calcium sorbate, 5000ppm
- Water, 94.5%
- Colors used:
   • A.- Titanium dioxide, 1-5%
   • B.- Iron oxides and hydroxides, 0.5-2%
   • C.- Charcoal, 0.001-0.1%
   • D.- Charcoal, 0.001-1%; Tartrazine, 0.01-1%; Carmine, 0.001-1%

The manufacturing process is carried out in the same way as in Example 1. At the end, the colors dispersed in a small portion of water are added.

### Test and application process:

Products A, B, C, and D, with the colors already incorporated:
Said colors are perfectly compatible with the sucrose esters, being correctly dispersed, the quality parameters being maintained completely normal and within expectations.
They are applied by means of a small brush on a cheese cured for 6 months. The preparations are previously diluted 1:1 with water and once applied, allowed to dry for 12 hours. Once dry, it is observed that the color is uniformly distributed and the appearance is within quality requirements.
Having sufficiently described the nature of the present invention, as well as the way of putting into practice, it is stated that, within its essence, it can be put into practice in other embodiments differing in detail from that indicated by way of example and which are also covered by the claimed protection provided that its essential principle is not altered, changed or modified

## Claims

1. Surface treatments and coatings for cheese and (sunflower and pumpkin) seeds with palmitic, lauric and stearic fatty acid esters with sucrose, intended to protect the food, and especially the surface thereof, **characterized by** the fact of comprising products with film-forming properties based on esters of palmitic sucrose ester fatty acids, lauric sucrose ester fatty acids and stearic sucrose ester fatty acids acting alone or in combination with preservatives and/or other food additives.

2. Surface treatments and coatings for cheese and (sunflower and pumpkin) seeds with palmitic, lauric and stearic fatty acid esters with sucrose according to claim 1, **characterized by** the fact that food additives such as for example pimaricin, sorbates, etc. are added to them.

3. Surface treatments and coatings for cheese and (sunflower and pumpkin) seeds with palmitic, lauric and stearic fatty acid esters with sucrose according to claims 1 and 2, **characterized by** the fact that food antioxidants such as for example BHT, tocopherols, isoascorbates, etc. are added to them.

4. Surface treatments and coatings for cheese and (sunflower and pumpkin) seeds with palmitic, lauric and stearic fatty acid esters with sucrose according to claims 1 to 3, **characterized by** the fact that the following food additives are added to them: emulsifiers, thickening agents, stabilizers and gelling agents, for example food gums (arabic, xanthan, guar gum, etc.), carrageenans, alginates, starch and derivatives thereof, cellulose and derivatives thereof, etc.

5. Surface treatments and coatings for cheese and (sunflower and pumpkin) seeds with palmitic, lauric and stearic fatty acid esters with sucrose according to claims 1 to 4, **characterized by** the fact that the following food additives are added to them; sequestering or metal chelating agents, such as for EDTA, phosphates and polyphosphates, etc.

6. Surface treatments and coatings for cheese and (sunflower and pumpkin) seeds with palmitic, lauric and stearic fatty acid esters with sucrose according to claims 1 to 5, **characterized by** the fact that any other food additive such as acidulants (for example, acetic acid, malic acid, etc.), wetting agents (for example, polyalcohols such as glycerol or sorbitol, polysaccharides, etc.), colors (such as for example curcumin, chlorophylls, etc.), etc. is added to them.

7. Surface treatments and coatings for cheese and (sunflower and pumpkin) seeds with palmitic, lauric and stearic fatty acid esters with sucrose according to claims 1 to 6, **characterized by** the fact that any mixture among the different agents mentioned in claims 2, 3, 4, 5 and 6 is added to them.

8. Surface treatments and coatings for cheese and (sunflower and pumpkin) seeds with palmitic, lauric and stearic fatty acid esters with sucrose according to claims 1 to 7, **characterized by** the fact that they are applied mixed with one or several of the groups of substances detailed below: (virgin or chemically modified) proteins, (virgin or chemically modified) carbohydrates, other hydrocolloids, resins, gums, oils, (natural, modified natural or synthetic) waxes, (natural or chemically modified) lipids, synthetic polymers (such as polyvinyl acetate, etc.).

9. Surface treatments and coatings for cheese and (sunflower and pumpkin) seeds with palmitic, lauric and stearic fatty acid esters with sucrose according to claims 1 to 8, **characterized by** the fact that they are found in the end product to be applied between 1% and 40% (w/w).

10. Surface treatments and coatings for cheese and (sunflower and pumpkin) seeds with palmitic, lauric and stearic fatty acid esters with sucrose according to claims 1 to 9, **characterized by** the fact that they comprise the application on (sunflower and pumpkin) seeds the formula of which is:
- Palmitic, lauric and stearic fatty acid esters with sucrose (palmitic, lauric and/or stearic sucrose esters, respectively), 1% - 25%
- Emulsifier, Stabilizer, Thickening agent or Gelling agent: 0.01% - 2%
- Main solvent: Water, 98.8% - 73%
- Co-solvent: Food alcohol or polyalcohol, 0.1% - 5%

11. Surface treatments and coatings for cheese and (sunflower and pumpkin) seeds with palmitic, lauric and stearic fatty acid esters with sucrose according to claim 10, **characterized by** the fact that in addition to the products mentioned in the formula of application on (sunflower and pumpkin) seeds, any other food additive such as preservatives, antioxidants, colors, acidulants, sweeteners, flavor enhancers, flavors, etc. are added to them.

12. Surface treatments and coatings for cheese and (sunflower and pumpkin) seeds with palmitic, lauric and stearic fatty acid esters with sucrose according to claims 1 to 11, **characterized by** the fact that a mixture according to the formula and components mentioned in claims 10 and 11 is used for the application on (sunflower and pumpkin) seeds, the preparation being carried out such that the sucrose ester or sucrose esters are added to 20 to 80% (preferably between 30-50%) of the water, preheated between 30 and 90°C (preferably between 50 and 60°C), and once a homogeneous mixture has been obtained, any of the additives mentioned in claims 2 to 8 and 11, previously dispersed in 80 to 20% (preferably between 70 and 50%) of the remaining water are added to it. The resulting product can be applied on the (sunflower and pumpkin) seeds either by immersion or spraying on the surface thereof.

13. Surface treatments and coatings for cheese and (sunflower and pumpkin) seeds with palmitic, lauric and stearic fatty acid esters with sucrose according to claims 1 to 9, **characterized by** the fact that for the application on cheese, a dispersion of palmitic, lauric and/or stearic sucrose esters between 1-40% (preferably between 1 and 20%) in water between 80 and 40% (preferably between 80 and 50%) is used together with any of the mentioned products or additives of claim 2 to claim 8. The preparation is carried out such that the sucrose ester or sucrose esters are added to the water preheated between 30 and 90°C (preferably between 50 and 60°C), and once a homogeneous mixture has been achieved, any of the mentioned additives of claim 2 to 8 previously dispersed between 19 and 20% (preferably between 19 and 30%) of the remaining water is added to it. The resulting product can be applied on the cheese either by immersion, spraying or applied directly by hand (for example by means of a brush or sponge) on the surface thereof.
